# EUROPEAN PATENT SPECIFICATION

(11) **EP 2 128 562 B1**
(45) Date of publication and mention of the grant of the patent: **03.04.2013**
(21) Application number: 09160193.0
(22) Date of filing: 14.05.2009
(51) Int. Cl.: G01B 21/04, G01B 5/00

(54) **Profile measuring device, method for profile measuring, and profile measuring program**
Profilmessvorrichtung, Verfahren zur Profilmessung und Profilmessprogramm
Dispositif de mesure de profil, procédé de mesure de profil et programme de mesure de profil

(30) Priority: 29.05.2008 JP 2008141570
(43) Date of publication of application: 02.12.2009
(73) Proprietor: Mitutoyo Corporation, Kawasaki-shi, Kanagawa 213-8533 (JP)
(72) Inventor: Kojima, Tsukasa, Sapporo-shi Hokkaido 060-0807 (JP)
(74) Representative: Grünecker, Kinkeldey, Stockmair & Schwanhäusser

(56) References cited:
- EP-A- 1 818 647
- JP-A- 2002 131 041
- US-A1- 2001 029 778
- US-A1- 2007 208 533
- US-A1- 2008 078 229

## Description

### CROSS REFERENCE TO RELATED APPLICATIONS

This application is based on and claims the benefit of priority from prior Japanese Patent Application No. 2008-141570, filed on May 29, 2008.

### BACKGROUND OF THE INVENTION

### Field of the Invention

The present invention relates to a profile measuring device such as a three-dimensional measuring instrument executing displacement measurement using a contact, a method for profile measuring, and a program for profile measuring, the latter being not claimed.

### Description of the Related Art

Generally, a contact in a contact measurement system using a contact type probe (contact) is assumed to be a sphere, and a position of a center of the sphere is assigned as a measurement point. The measurement point in this case differs from a position where the contact makes contact with an object-to-be-measured. This causes an error with respect to an actual profile of the object-to-be-measured.

Consequently, Japanese Unexamined Patent Application Publication No. 2001-280947 (patent document 1) describes a configuration in which an error of a profile of the contact from a sphere is obtained in advance and correction is made by adding the error component to the radius thereof as well. Note that in patent document 1 the measurement point is derived as it is located on a direction normal to a locus of the center of the contact.

Furthermore, Japanese Unexamined Patent Application Publication No. 08-43078 (patent document 2) describes a configuration in which a measurement point derivation vector for each normal direction to a surface of the contact is obtained in advance, and the measurement point is derived referring to the measurement point derivation vector. In this patent document 2, a measurement point is determined from a vector which is referred to using a normal direction to the locus of the center of the contact as an index.

Moreover, Japanese Unexamined Patent Application Publication No. 2007-212359 (patent document 3) describes a configuration in which a contact model is allocated along a locus of a certain position of the contact and the measurement point is derived on the basis of the contact model and the measurement point derivation vector.

However, the configuration disclosed in patent document 1 has a problem that the profile of the contact is limited to a sphere-like profile, and that measurement accuracy becomes low in a case where the profile of the contact differs greatly from the sphere.

Furthermore, the configurations disclosed in patent documents 2 and 3 have a problem that disturbances in the locus of the center of the contact arising from measurement error make it difficult to derive the measurement point.

US2007/0208533 describes a configuration in which a geometric shape filter is used.

### SUMMARY OF THE INVENTION

In accordance with an aspect of the present invention, a profile measuring device that causes a contact to follow a surface of an object-to-be-measured and measures a profile of the surface of said object-to-be-measured is provided. This device comprises: an acquiring section that acquires, as pseudo-measurement points, positional coordinates of a basing point of said contact when said contact is in contact with said object-to-be-measured at a plurality of places, or acquires profile data related to the profile of the surface of said object-to-be-measured; a contact model allocating section that allocates a contact model by matching a basing point of said contact model to one of said pseudo-measurement points or said profile data, and matching an orientation of said contact and said contact model at a time of measuring, said contact model specifying a surface profile of said contact and having a predetermined definition range; a measurement point acquiring section that acquires, as measurement points, positions of the surface of said object-to-be-measured based on said contact model as well as said pseudo-measurement points or said profile data; and a measurement point deleting section that deletes a measurement point obtained by said measurement point acquiring section based on a relationship between said definition range and said measurement points.

In accordance with the aspect of the present invention, a method of measuring a profile of a surface of an object-to-be-measured by causing a contact to follow the surface of the object-to-be-measured is provided. The method comprises: acquiring, as pseudo-measurement points, positional coordinates of a basing point of said contact when said contact is in contact with said object-to-be-measured at a plurality of places or acquiring profile data related to the profile of the surface of said object-to-be-measured; allocating a contact model by matching a basing point of said contact model to one of said pseudo-measurement points or said profile data, and matching an orientation of said contact and said contact model at a time of measuring, said contact model specifying a surface profile of said contact and having a predetermined definition range; acquiring, as measurement points, positions of the surface of said object-to-be-measured based on said contact model as well as said pseudo-measurement points or profile data; and deleting a measurement point obtained by said measurement point acquiring section based on a relationship between said definition range and said measurement points.

A program for profile measuring configured to cause a computer to execute the corresponding method is provided (not claimed).

### BRIEF DESCRIPTION OF THE DRAWINGS

Fig. 1 is a schematic configuration view of a profile measuring device in accordance with a first embodiment of the present invention.
Fig. 2 is a functional block diagram of the profile measuring device in accordance with the first embodiment of the present invention.
Fig. 3 is a flowchart describing an operation of the profile measuring device in accordance with the first embodiment of the present invention.
Fig. 4 is a view describing an operation to acquire a pseudo-measurement point Aₖ in the profile measuring device in accordance with the first embodiment of the present invention.
Fig. 5 is a view describing an operation to generate a guide line Bₖ in the profile measuring device in accordance with the first embodiment of the present invention.
Fig. 6 is a view describing an operation to allocate a contact model C in the profile measuring device in accordance with the first embodiment of the present invention.
Fig. 7 is a view describing an operation to acquire an intersection point Pₖ and a measurement point Mₖ in the profile measuring device in accordance with the first embodiment of the present invention.
Fig. 8 is an enlarged view of the region AR in Fig. 7.
Fig. 9 is a view describing the operation to acquire the measurement point Mk in the profile measuring device in accordance with the first embodiment of the present invention.
Fig. 10 is a view describing an effect of the profile measuring device in accordance with the first embodiment of the present invention.
Fig. 11 is a schematic view describing the contact model C.
Fig. 12 is a descriptive view showing a relationship between a measurement range of a corrected measurement and a definition range DA of the contact model C.
Fig. 13 is a descriptive view showing the relationship between the measurement range of the corrected measurement and the definition range DA of the contact model C.
Fig. 14 is a conceptual view showing a difference between a calculated measurement point sequence Mk and a work surface in a case that an object to be measured having a semispherical profile is measured.
Fig. 15 is a conceptual view describing a procedure to delete the measurement point Mk from the measurement point sequence (step S16).
Fig. 16 is a conceptual view describing the procedure to delete the measurement point Mk from the measurement point sequence (step S16).
Fig. 17 is a conceptual view describing the procedure to delete the measurement point Mk from the measurement point sequence (step S16).
Fig. 18 is a conceptual view describing the procedure to delete the measurement point Mk from the measurement point sequence (step S16).
Fig. 19 is a conceptual view describing the procedure to delete the measurement point Mk from the measurement point sequence (step S16).
Fig. 20 is a functional block diagram of a profile measuring device in accordance with a second embodiment of the present invention.
Fig. 21 is a flowchart describing an operation of the profile measuring device in accordance with the second embodiment of the present invention.
Fig. 22 is a conceptual view describing the operation of the profile measuring device in accordance with the second embodiment.
Fig. 23 is a conceptual view describing the operation of the profile measuring device in accordance with the second embodiment.
Fig. 24 shows a variant example of an embodiment of the present invention.

### DETAILED DESCRIPTION OF THE EMBODIMENTS

A profile measuring device in accordance with an embodiment of the present invention is now described with reference to the drawings.

### First Embodiment

### Configuration of the profile measuring device in accordance with a first embodiment

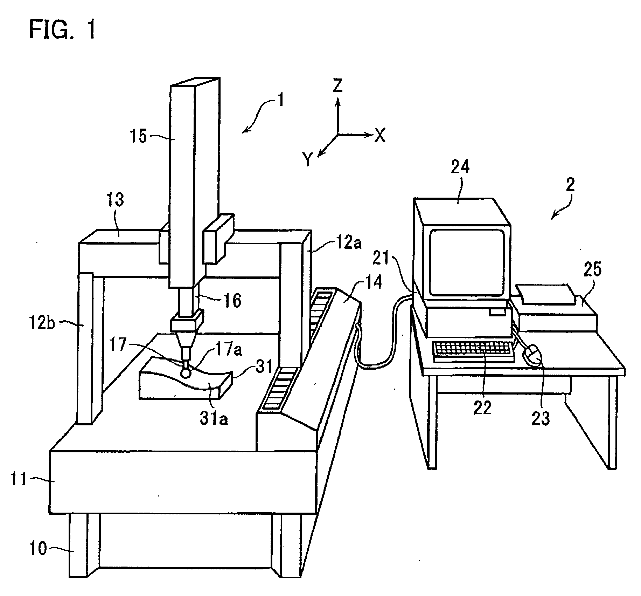

Fig. 1 is a perspective view showing a schematic configuration of the profile measuring device in accordance with the first embodiment of the present invention. This profile measuring device is configured from a three-dimensional measuring instrument 1, and a computer 2 that drives and controls this measuring instrument 1 to download a required measurement value, and executes an arithmetic processing required for a profile processing.

The three-dimensional measuring instrument 1 is configured as shown in Fig. 1, for example. It is equipped with a vibration-removing platform 10. A surface table 11 is positioned on the vibration-removing platform 10 such that its upper surface as a base surface coincides with a horizontal plane.

A beam 13 extending in an X axis direction is supported by upper ends of beam supports 12a and 12b. These beam supports 12a and 12b are vertically extended from both end sides of this surface table 11.

The beam support 12a has a lower end thereof driven in a Y axis direction by a Y axis drive mechanism 14. Furthermore, the beam support 12b has a lower end thereof supported by an air bearing to be movable in the Y axis direction on the surface table 11. The beam 13 supports a column 15 extending in a vertical direction (Z axis direction), The column 15 is driven in the X axis direction along the beam 13. The column 15 is provided with a spindle 16 such that the spindle 16 is driven in a Z axis direction along the column 15. Attached to a lower end of the spindle 16 is a probe 17 of a contact type. Moreover, formed at a leading end of the probe 17 is a contact 17a of a certain profile, for example, of an elliptically spherical profile. When this contact 17a makes contact with a surface 31a of an object-to-be-measured 31 positioned on the surface table 11, a touch signal is outputted, and an XYZ coordinate value of a reference position of the contact 17a at that time is downloaded to the computer 2.

The computer 2 comprises a computer main unit 21, a keyboard 22, a mouse 23, a CRT 24 and a printer 25.

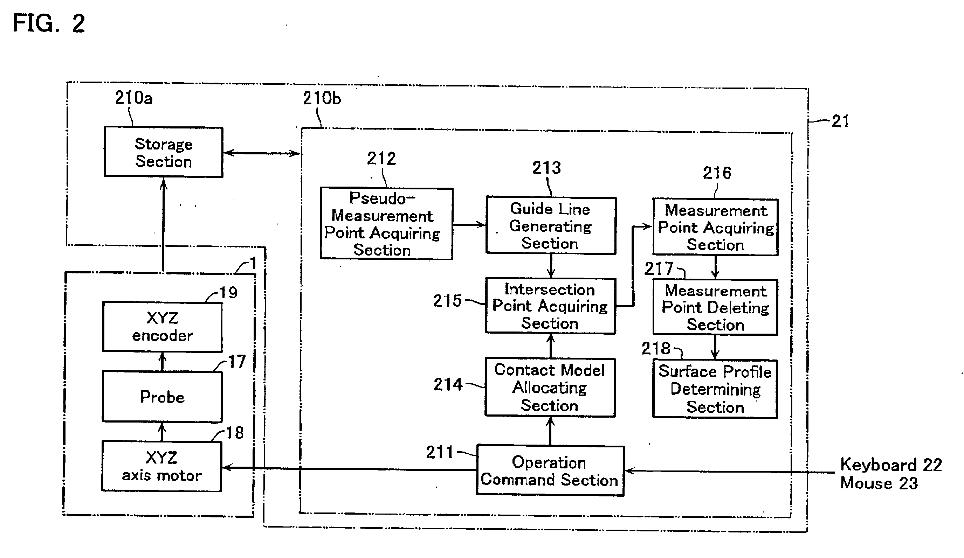

Fig. 2 is a functional block diagram of this profile measuring device.

The three-dimensional measuring instrument 1 includes therein an XYZ motor 18 and an XYZ encoder 19. The YZ axis motor 18 serves for driving the probe 17 in XYZ axis directions. The XYZ encoder 19 outputs a movement pulse for each axis direction based on movement in the XYZ axis directions. Moreover, when there is a contact of the contact 17a with the surface 31a of the object-to-be-measured 31, the XYZ encoder 19 acquires positional information of a basing point of the contact 17a (for example, a center of gravity of the contact 17a). The positional information obtained is stored in a storage section 210a.

The computer main unit 21 of the computer 2 is configured mainly from the storage section 210a and a control section 210b. The storage section 210a comprises, for example, an HDD, semiconductor memory, or the like. The control section 210b is realized by a profile measuring program that calculates a measurement point based on information stored in the storage section 210a, or drives the three-dimensional measuring instrument 1, and a CPU or the like for executing the profile measuring program.

The storage section 210a stores information of a position and orientation of the contact 17a at a time of measuring, information of a profile of the contact used in measuring, information calculated by the control section 210b to be described hereafter, and so on.

The control section 210b is provided with an operation command section 211, a pseudo-measurement point acquiring section 212, a guide line generating section 213, a contact model allocating section 214, an intersection point acquiring section 215, a measurement point acquiring section 216, a measurement point deleting section 217, and a surface profile determining section 218.

The operation command section 211 causes the contact 17a to follow the surface 31a of the object-to-be-measured 31 through the XYZ axis motor 18 based on an input value from the keyboard 22 and mouse 23.

The pseudo-measurement point acquiring section 212 acquires, as a pseudo-measurement point, positional information of a basing point (for example, a position of the center of gravity) of the contact 17a at a time of a contact of the contact 17a with the object-to-be-measured 31 at a plurality of places.

The guide line generating section 213 generates a guide line directed approximately in a direction from the pseudo-measurement point towards a surface of the object-to-be-measured.

The contact model allocating section 214 allocates a contact model by matching to the pseudo-measurement point a basing point of the contact model, and matching an orientation of the contact and the contact model at the time of measuring, the contact model specifying a surface profile of the contact 17a.

The intersection point acquiring section 215 acquires an intersection point at which each guide line and a surface of each allocated contact model intersect.

The measurement point acquiring section 216 acquires, as a measurement point, the intersection point most distant from the pseudo-measurement point among the intersection points with each guide line.

The measurement point deleting section 217 deletes a portion of the measurement points acquired by the measurement point acquiring section 216 in accordance with a predetermined protocol.

The surface profile determining section 218 determines a profile of the object-to-be-measured based on each measurement point acquired by the measurement point acquiring section 216 and selected by the measurement point deleting section 217. Note that this information obtained by the control section 210b is stored in the storage section 210a.

### Operation of the profile measuring device in accordance with the first embodiment

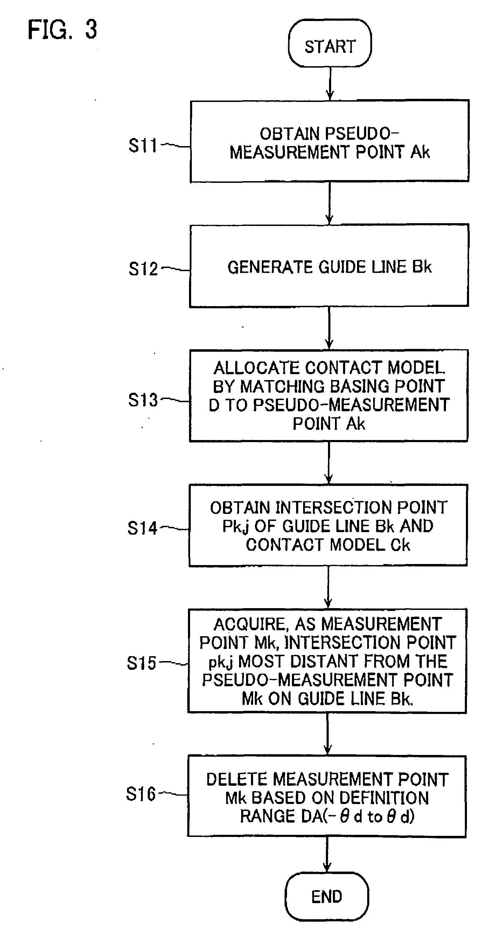

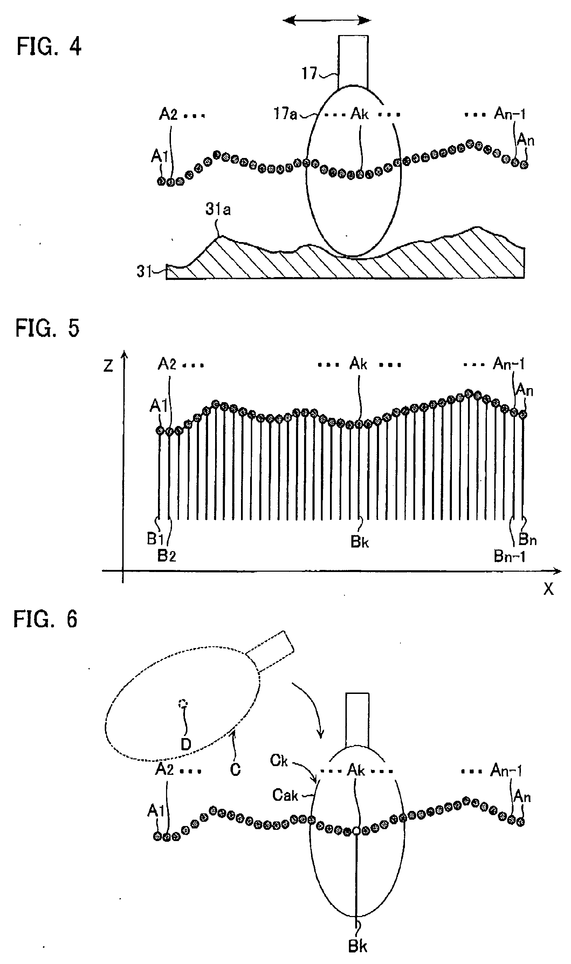

A measurement point acquiring method using the profile measuring device in accordance with the first embodiment is now described in line with the flowchart shown in Fig. 3, and making appropriate reference to Figs. 4-9. Note that, for simplification, Figs. 4 to 9 are shown two-dimensionally as cross-sectional views of the object-to-be-measured.

First, the operation command section 211 causes the contact 17a to be in contact with the surface 31a of the object-to-be-measured 31 based on an operation of the keyboard 22 and the mouse 23 by a user, thereby scanning the probe 17 linearly in a predetermined direction, as shown in Fig, 4. Along with this, the pseudo-measurement point acquiring section 212 detects positions where the contact 17a made contact with the surface 31a of the object-to-be-measured 31 to acquire a pseudo-measurement point Aₖ (k = 1∼n) (step S11). Note that measurement in this process of step S11 may be either point measurement or scanning measurement.

Next, the guide line generating section 213 generates guide lines Bₖ (k = 1∼n) directed approximately in a direction from the pseudo-measurement points Aₖ towards the surface 31a of the object-to-be-measured 31 (step S12), as shown in Fig. 5. For example, each of the guide lines Bₖ is generated in a range of ±45 °from a normal to a locus of the pseudo-measurement points Aₖ. Note that Fig. 5 shows an example in which the guide lines Bₖ are generated to be parallel to one another; however, the guide lines Bₖ need not necessarily be parallel to one another.

Subsequently, the contact model allocating section 214 executes allocation of a contact model C, by matching to the respective pseudo-measurement points Aₖ a basing point D of a contact model C, the basing point D being a predetermined position of the contact model C, and matching an orientation of the contact 17a at the time of measuring and an orientation of the contact model C (step S13), as shown in Fig. 6. The contact model C allocated by matching the basing point D to the pseudo-measurement point Aₖ is hereafter referred to as contact model Cₖ. Note that, although Fig. 6 describes only concerning one pseudo-measurement point Aₖ, the contact model allocating section 214 executes this processing on all the pseudo-measurement points Aₖ (k = 1∼n).

Next, the intersection point acquiring section 215 acquires an intersection points P_{k,j} (k = 1∼n, j = 1∼m) of a surface Caₖ (k = 1∼n) of the contact model Cₖ (k = 1∼n) and the guide lines Bₖ (k = 1∼n) (step S14). Then, the measurement point acquiring section 216 acquires, as a measurement point Mₖ, the intersection point P_{k,j} most distant from the pseudo-measurement point Aₖ among the intersection points P_{k,j} with each guide lines Bₖ (step S15).

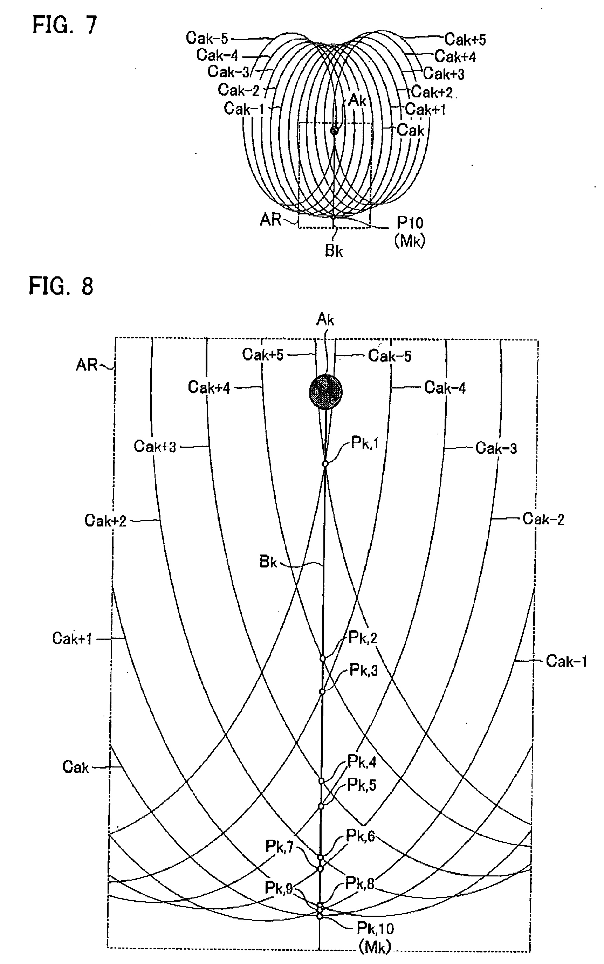

Here, a specific example of step S14 and step S15 is described referring to Fig. 7 and Fig. 8. Fig. 7 is a view showing the surfaces Caₖ₋₅∼Caₖ₊₅ of the contact models Cₖ₋₅∼Cₖ₊₅ allocated to the pseudo-measurement points Aₖ₋₅∼Aₖ₊₅, centered around one pseudo-measurement point Aₖ, Furthermore, Fig. 8 is an enlarged view of the region AR in Fig. 7.

In step S14 of the example shown in Fig. 7 and Fig. 8, 10 intersection,points P_{k,1}∼P_{k,10} with the guide line By are acquired, Here, the notation "Pₓ (Bₓ, Caₓ)" is adopted to describe the fact that the intersection point Pₓ is the intersection point of the guide line Bₓ and the surface Caₓ. If such a notation is adhered to, the above-described intersection points P_{k,1}∼P_{k,10} can be expressed as "P_{k,1} (B_{k,} Caₖ₊₅ (or (Caₖ₋₅))", "P_{k,2} (B_{k,} Caₖ₊₄)", "P_{k,3} (B_{k,} Caₖ₋₄)", "P_{k,4} (Bₖ, Caₖ₊₃)", "P_{k,5} (B_{k,} Caₖ₋₃)", "P_{k,6} (B_{k,} Caₖ₊₂)", "P_{k,7} (B_{k,} Caₖ₋₂)", "P_{k,8} (B_{k,} Caₖ₊₁)", "P_{k,9} (B_{k,} Caₖ₋₁)", "P_{k,10} (B_{k,} Caₖ)".

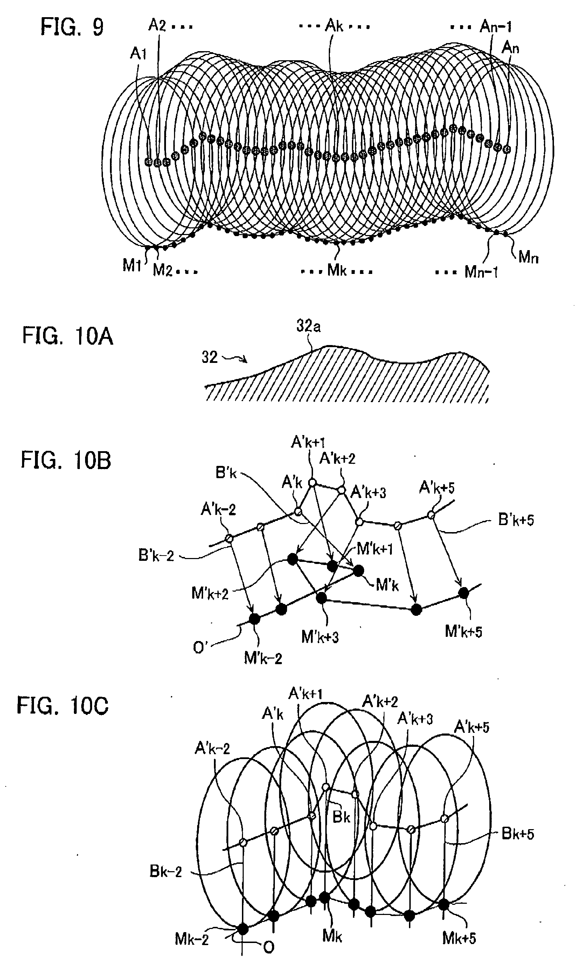

Further, in step S15 of the example shown in Fig. 7 and Fig. 8, the intersection point P_{k,10} most distant from the pseudo-measurement point Aₖ among the intersection points P_{k,1}∼P_{k,10} with each guide line Bₖ is acquired as the measurement point Mₖ. After undergoing a processing of the above-described steps S11∼S15, each measurement point Mₖ (k = 1∼n) corresponding to each pseudo-measurement point Aₖ is acquired, as shown in Fig. 9.

As described above, the profile measuring device in accordance with the first embodiment acquires the intersection point P_{k,j} of the contact model Cₖ allocated to the pseudo-measurement point Aₖ and the guide line Bₖ extending from the pseudo-measurement point Aₖ, and acquires as the measurement point Mₖ the intersection point P_{k,j} most distant from the pseudo-measurement point Aₖ.

Here, other configurations (comparative examples) differing from the present embodiment may be considered as a method for acquiring the measurement point Mₖ. For example, in one of the other configurations, pseudo-measurement points A'ₖ (k = 1∼n) are first acquired, a surface (or line) fitted to the pseudo-measurement points A'ₖ is estimated, and measurement point deriving vectors B'ₖ (k = 1∼n) are generated. The vector B'ₖ (k= 1∼n) are perpendicular lines extending from the pseudo-measurement points A'ₖ to that surface. Then, in the one of the other configurations, positions located on the measurement point deriving vectors B'ₖ and separated from the pseudo-measurement points A'ₖ by a predetermined distance are acquired as the measurement points M'ₖ (k = 1∼n).

However, in the above-described configuration, there arises the following problem. Specifically, as shown in Fig. 10A, when a surface 32a of an object-to-be-measured 32 is measured along a predetermined direction, and some of the acquired pseudo-measurement points, for example, pseudo-measurement points A'ₖ₊₁, A'ₖ₊₂ may be greatly deviated, due to measurement error, compared to the other pseudo-measurement points.

In this case, the measurement points M'ₖ (k = 1∼n) differ from an actual profile of the surface 32a of the object-to-be-measured 32, as shown in Fig. 10B. That is to say, as shown by the measurement points M'ₖ∼M'ₖ₊₃ in Fig. 10B, although measurement points are obtained by measuring the surface 32a of the object-to-be-measured 32 along a predetermined direction, a locus O' linking these measuring points M'ₖ forms a loop.

On the other hand, according to the profile measuring device in accordance with the first embodiment of the present invention, even when the surface 32a of the object-to-be-measured 32 as shown in Fig. 10A is measured along a predetermined direction, and, as shown in Fig. 10B, the pseudo-measurement points A'ₖ₊₁, A'ₖ₊₂ are greatly deviated compared to the other pseudo-measurement points due to measurement error, the locus O linking the measurement points Mₖ does not form a loop, and the measurement points Mₖ are close to the actual profile of the surface 32a of the object-to-be-measured 32.

That is to say, the profile measuring device in accordance with the first embodiment may acquire accurate measurement points, even if the profile of its contact is not an ideal sphere.

Note that, in the first embodiment, when distances between the pseudo-measurement points acquired by the pseudo-measurement point acquiring section 212 are large, interpolation processing may be executed in the pseudo-measurement point acquiring section 212 to interpolate the pseudo-measurement points, for example. It is also possible to provide an interpolating section independently from the pseudo-measurement point acquiring section 212.

Description is continued returning once again to Fig. 3. When a plurality of the measuring points Mₖ configuring a measurement point sequence are obtained as described above, a number of measurement points included in the plurality of measurement points Mₖ are deleted from the measurement point sequence, if it is supposed that these measuring points include large errors (step S16).

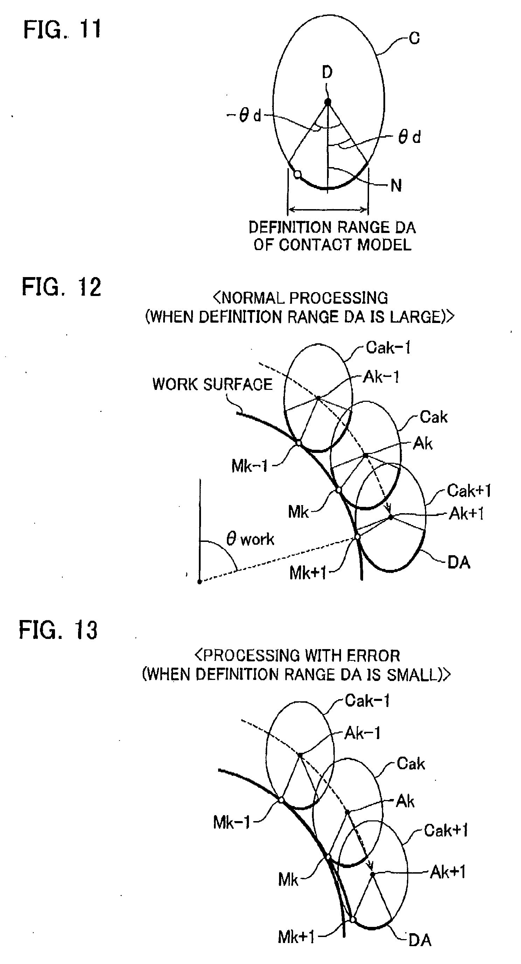

In the present embodiment, the contact model C has a definition range DA defined by an angle ±θd, and a portion of the measurement points Mₖ are deleted from the measurement point sequence based on this definition range DA, as shown in Fig. 11. A process for deleting the measurement points Mₖ is now described in detail referring to the drawings.

The definition range DA of the contact model C is defined as a fan-shaped area symmetrically widening from a vertical line N dropped from the basing point D (angle θd to the right of the vertical line, angle -θd to the left of the vertical line), for example, as shown in Fig. 11. This definition range DA is calculated from an outline of a pseudo-measurement point sequence obtained by measuring a reference measurement object having a known profile. The broader a measurement range of this calibration measurement, the broader the definition range DA (the larger the angle θd); the narrower the measurement range of the calibration measurement, the narrower the definition range DA (the smaller the angle θd).

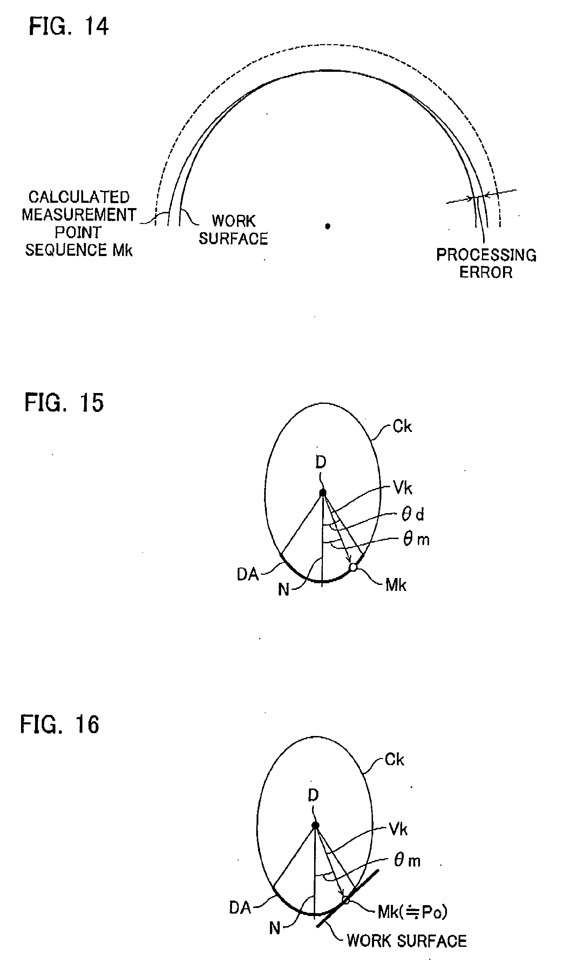

In a case that the definition range DA is broad, almost no error occurs in a calculation of the measurement points Mₖ based on the calculated pseudo-measurement points Aₖ, as shown in Fig. 12. However, in a case that the definition range DA is narrow, the greater an inclination of a measurement surface of the object-to-be-measured becomes, the more the calculated measurement point Mₖ departs from an actual surface of the object-to-be-measured (work surface) resulting in a large error, as shown in Fig. 13. This is because an error in the calculation occurs due to the fact that the object-to-be-measured and the contact are actually making contact outside the definition range DA. Fig. 14 shows a difference between the calculated measurement point Mₖ and the work surface in a case of measuring an object-to-be-measured that has a semispherical profile. The greater an inclination of the work surface, the larger the difference between the work surface and the measurement point sequence becomes; however, it is difficult to distinguish whether this is based on a profile of the work surface, or based on a measurement error.

Consequently, in the present embodiment, only the measurement points Mₖ obtained when the contact 17a and the object-to-be-measured make contact inside the definition range DA of the contact model C are left (without being deleted) in the measurement point sequence, whereas the measurement points Mk obtained when the contact 17a and the object-to-be-measured make contact outside the definition range DA are deleted from the measurement point sequence. Specifically, in a case that an angle θm from the vertical line N of a directional vector Vₖ directed from the basing point D to the calculated measurement point Mₖ is smaller than θd as shown in Fig. 15, the measurement point so obtained is determined on an inside and not an outside of the definition range DA as shown in Fig. 16. An error between the measurement point Mₖ obtained in such a case and an actual contact point Pc is considered to be small, and the measurement point Mₖ is thus not deleted from the measurement point sequence but allowed to remain.

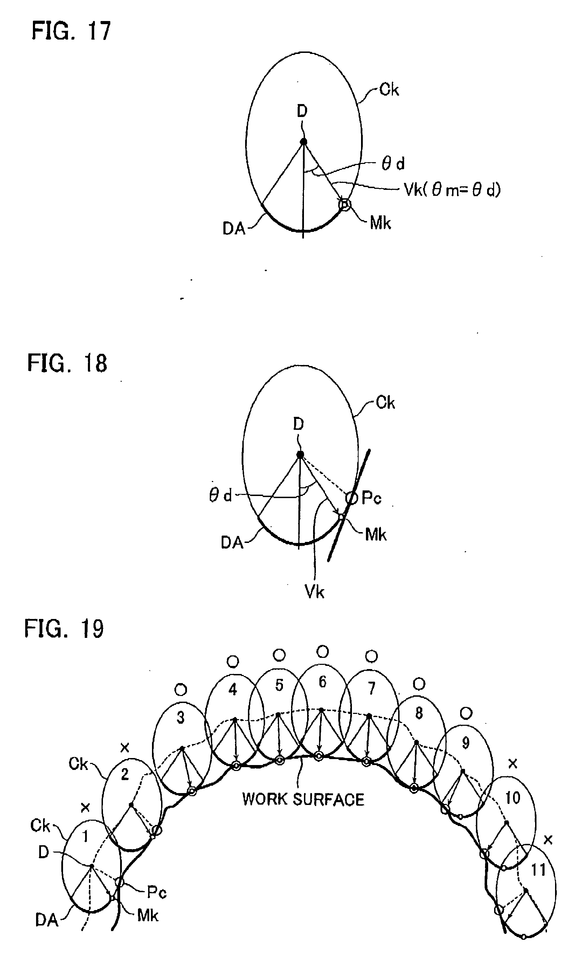

In contrast, in a case that the angle θm from the vertical line N of the directional vector Vₖ is found to be equal to ±θd (θm = ±θd) as shown in Fig. 17, the actual contact point Pc is supposed to be outside of the definition range DA, and the error between the measurement point Mₖ obtained and the actual contact point Pc is considered to be large. Consequently, such a measurement point Mₖ set in the outside (edge) of the definition range DA is deleted from measurement point sequence.

For example, as shown in Fig. 19, in the contact models C set at positions in which the inclination of the work surface is large (numbers 1, 2, 10, and 11), the measurement points Mₖ are obtained as θm = ±θd, and these measurement points Mₖ are thus deleted from the measurement point sequence (shown by a cross mark in Fig. 19),

In accordance with the above, a process for acquiring the measurement point sequence is completed, and the surface profile determining section 218 executes a determination of the surface profile of the object-to-be-measured based on the measurement point sequence obtained through the above steps.

Note that, although in the above description θm = θ d is set as a condition for deleting the measurement point Mₖ, this is limited to a case of the configuration specifically described in the above embodiment, and the present invention is obviously not limited to this.

### Second Embodiment

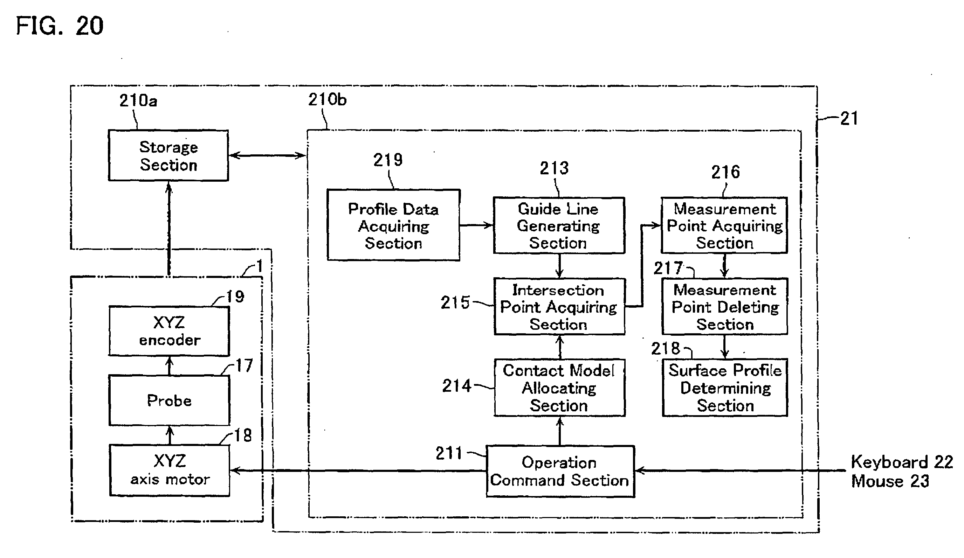

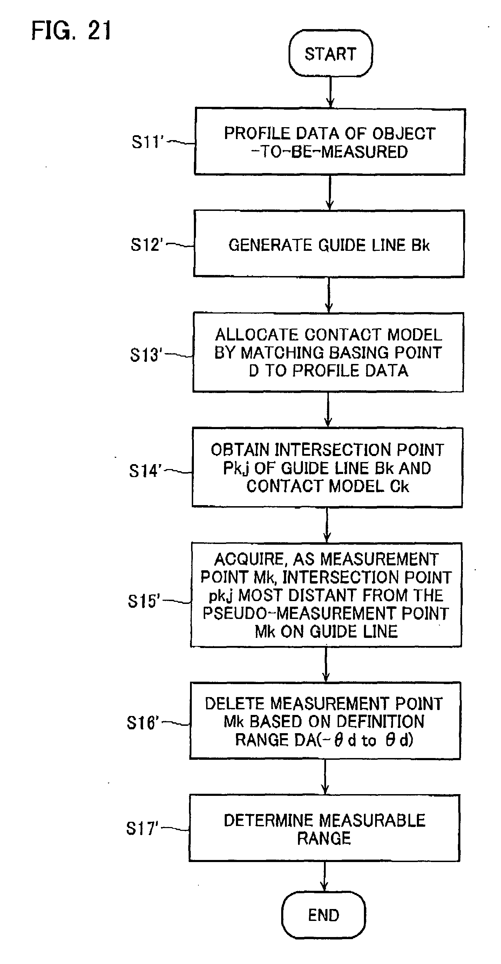

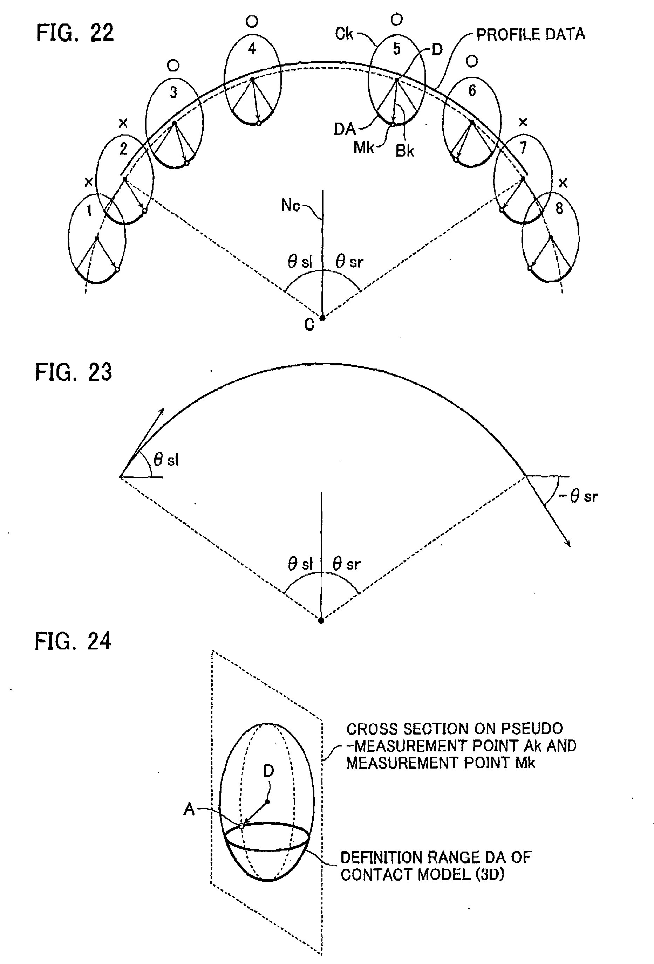

A second embodiment of the present invention is now described in detail with reference to the drawings. An external appearance of the profile measuring device is substantially identical to that of the first embodiment (Fig. 1), and a description is therefore omitted. Fig. 20 is a functional block diagram of the profile measuring device of the present embodiment. Fig. 21 is a flowchart showing steps of executing the profile measuring method in the present embodiment, and Figs. 22 and 23 are conceptual views describing the profile measuring method in accordance with the present embodiment. Note that identical symbols are assigned to parts that are identical to those in the first embodiment, and repetitive descriptions are hereafter omitted.

In the first embodiment, the measurement points Mₖ are obtained by causing the contact 17a to actually move along the surface of the object-to-be-measured and obtaining the pseudo-measurement points Aₖ in the pseudo-measurement point acquiring section 212, and then allocating the contact models C such that the basing point D is matched to these pseudo-measurement points Aₖ, In contrast to this, in the present embodiment, instead of actually measuring the object-to-be-measured and obtaining the pseudo-measurement points in the pseudo-measurement point acquiring section 212, a profile data acquiring section 219 that acquires profile data (CAD data, and so on) of the object-to-be-measured is provided as shown in Fig. 20, and the profile data of the object-to-be-measured is acquired from an external CAD system (not shown) for example as shown in Fig. 21 (step S11').

Then, the guide lines Bk are generated similarly to the first embodiment in accordance with this profile data (step S12'), and the contact models C are allocated such that the basing point D is matched to the profile data (step S13'). Subsequently, acquisition of the intersection points P_{k,j} is executed in a substantially identical manner to the first embodiment (step S14'). Next, a procedure for acquisition of the measuring points Mₖ is executed (step S15'). The measurement points Mₖ here are not ones obtained by actually measuring the object-to-be-measured but are measurement points resulting from simulation. Furthermore, this step S15' differs from the step S15 of the first embodiment in that the intersection point P_{k,j} most distant from the profile data is acquired as the measurement point Mₖ.

Next, a portion of the plurality of measuring points Mₖ thus obtained is deleted from the measuring point sequence according to identical criteria to the first embodiment (step S16'). After execution of the procedure for deleting the measurement points Mₖ, a measurable range in which measurement by the contact model C is possible is determined based on the remaining measurement point sequence (step S17').

That is to say, this embodiment differs from the first embodiment in that the contact models C are allocated along the profile data (CAD data, and so on), not along the pseudo-measurement points Aₖ obtained by actually measuring the object-to-be-measured. A range of the measurement points Mₖ left undeleted by this procedure is determined as the measurable range in which measurement by the contact model C is possible (defined by a maximum inclination angle of the work surface).

As shown in Fig. 22, when a surface of arc-shaped object-to-be-measured having a center point C is measured, measurement points Mₖ obtained at positions of numbers 3-6 remain without deletion, whereas measurement points Mₖ obtained at positions of numbers 1, 2, 7, and 8 are deleted from the measurement point sequence. Further, the measurable range that is measurable by the contact model is determined based on borders between the remaining measurement points Mₖ and the deleted measurement points Mₖ. Here, the measurable range is determined, as shown in Fig. 23, by angles (θsl, θsr) of the positions of numbers 2 and 7 that are deleted first as shown in Fig. 22. Determination of the measurable range makes it possible to predict the actual measurable range in subsequent measurement, and to avoid measurement in which the required measurement accuracy is unobtainable. In addition, it is also possible to exclude from the measurement point sequence the measurement points obtained outside the measurable range determined. Furthermore, if there is dissatisfaction with the measurable range determined, the measurement can also be discontinued and a separate contact substituted.

### [Other Embodiments]

This concludes description of embodiments of the present invention, but it should be noted that the present invention is not limited to the above-described embodiments, and that various alterations, additions, substitutions, and so on, are possible within a range not departing from the scope of the invention. For example, the three-dimensional measuring instrument is taken as an example in the above-described embodiments but the present invention is not limited to the three-dimensional measuring instrument and can also be applied to a two-dimensional measuring instrument (for example, a contour measurement contracer, and so on). Furthermore, in the above-described embodiments, the contact model C of an elliptically spherical profile is set corresponding to the contact 17a of an elliptically spherical profile but a spherical contact model corresponding to a spherical contact may also be set in place of this,

Moreover, in the above-described embodiments, the definition range of the contact model C is defined two-dimensionally but it may also be defined three-dimensionally as shown in Fig. 24. That is to say, operations identical to those of the first and second embodiments may also be executed in an intersection surface of a cross-sectional surface containing the pseudo-measurement points Aₖ and the measurement points Mₖ, and this three-dimensional defined definition range DA.

## Claims

1. A profile measuring device for causing a contact type probe (17a) to follow a surface of an object-to-be-measured (31) and for measuring a profile of the surface of said object-to-be-measured, the device comprising:
an acquiring section (212,219) that acquires, as pseudo-measurement points (Aₖ), positional coordinates of a basing point (D) of said contact type probe when said contact type probe is in contact with said object-to-be-measured at a plurality of places, or acquires profile data related to the profile of the surface of said object-to-be-measured,
**characterized in that** the device further comprises:
a guide line generating section (213) that sets a guide line (B) extending in a direction from one of the pseudo-measurement points or the profile data, the direction being within a certain angle from a normal that is perpendicular to a locus of the pseudo-measurement points;
a contact model allocating section (214) that allocates a contact model (C) by matching a basing point of said contact model to one of said pseudo-measurement points or said profile data, and matching an orientation of said contact type probe and said contact model at a time of measuring, said contact model specifying a surface profile of said contact type probe and having a predetermined definition range (DA), the definition range being defined as a fan-shaped area symmetrically widening from a line extending from the basing point of the contact model;
a measurement point acquiring section (216) that acquires, as measurement points, positions of the surface of said object-to-be-measured based on intersection points of the guide line and a surface of said contact model; and
a measurement point deleting section (217) that deletes a measurement point obtained by said measurement point acquiring section based on a relationship between said definition range and said measurement points.

2. The profile measuring device according to claim 1, wherein said measurement point deleting section deletes the measurement point set at an end of said definition range.

3. A method of measuring a profile of a surface of an object-to-be-measured by causing a contact type probe to follow the surface of the object-to-be-measured, the method comprising:
acquiring, as pseudo-measurement points, positional coordinates of a basing point of said contact type probe when said contact type probe is in contact with said object-to-be-measured at a plurality of places or acquiring profile data related to the profile of the surface of said object-to-be-measured;
**characterized in that** the method further comprises:
setting a guide line extending in a direction from one of the pseudo-measurement points or the profile data, the direction being within a certain angle from a normal that is perpendicular to a locus of the pseudo-measurement points;
allocating a contact model by matching a basing point of said contact model to one of said pseudo-measurement points or said profile data, and matching an orientation of said contact type probe and said contact model at a time of measuring, said contact model specifying a surface profile of said contact type probe and having a predetermined definition range the definition range being defined as a fan-shaped area symmetrically widening from a line extending from the basing point of the contact model;
acquiring, as measurement points, positions of the surface of said object-to-be-measured based on intersection points of the guide line and said contact model ; and
deleting a measurement point obtained by said measurement point acquiring section based on a relationship between said definition range and said measurement points.

4. The method according to claim 3, wherein in deleting a measurement point, a measurement point set on the edge of the definition range is deleted.

## Patentansprüche

1. Profilmessvorrichtung zum Folgen einer Oberfläche eines zu messenden Objekts (31) durch einen Kontaktmessfühler (17a) und zum Messen eines Oberflächenprofils des zu messenden Objekts, wobei die Vorrichtung umfasst:
einen Erfassungsabschnitt, der als Pseudomesspunkte (Aₖ) Lagekoordinaten eines Referenzpunktes (D) des Kontaktmessfühlers erfasst, wenn der Kontaktmessfühler mit dem zu messenden Objekt an einer Vielzahl von Stellen in Kontakt ist oder der Profildaten, die dem Oberflächenprofil des zu messenden Objekts entsprechen, erfasst,
**dadurch gekennzeichnet, dass** die Vorrichtung des Weiteren umfasst:
einen Führungslinien erzeugenden Abschnitt (213), der eine Führungslinie (B) festlegt, die sich in eine Richtung von den Pseudomesspunkten oder den Profildaten aus erstreckt, wobei die Richtung innerhalb eines bestimmten Winkels von einer Normalen liegt, die rechtwinklig zu einem Locus der Pseudomesspunkte ist;
einen Kontaktmodell zuweisenden Abschnitt (214), der ein Kontaktmodell (C) zuordnet durch Abgleichen eines Referenzpunktes des Kontaktmodells mit den Pseudomesspunkten oder den Profildaten, und durch Abgleichen einer Richtung des Kontaktmessfühlers und des Kontaktmodells zum Zeitpunkt der Messung, wobei das Kontaktmodell ein Oberflächenprofil des Kontaktmessfühlers angibt und einen vorbestimmten Definitionsbereich (DA) aufweist, wobei der Definitionsbereich als eine fächerförmige Fläche definiert ist, die sich symmetrisch von einer sich von dem Referenzpunkt des Kontaktmodells aus erstreckenden Linie ausweitet;
einen Messpunkterfassungsabschnitt (216), der als Messpunkte Positionen der Oberfläche des zu messenden Objekts auf der Grundlage von Schnittpunkten der Führungslinien und einer Oberfläche des Kontaktmodells erfasst; und
ein Messpunktlöschungsabschnitt (217), der einen durch den Messpunkterfassungsabschnitt erhaltenen Messpunkt auf der Grundlage einer Beziehung zwischen dem Definitionsbereich und den Messpunkten löscht.

2. Profilmessvorrichtung nach Anspruch 1, wobei der Messpunktlöschungsabschnitt den am Ende des Definitionsbereichs festgelegten Messpunkt löscht.

3. Verfahren zum Messen eines Oberflächenprofils eines zu messenden Objekts, indem ein Kontaktmessfühler der Oberfläche des zu messenden Objekts folgt, umfassend:
Erfassen von Lagekoordinaten eines Referenzpunktes des Kontaktmessfühlers als Pseudomesspunkte, wenn der Kontaktmessfühler mit dem zu messenden Objekt an einer Vielzahl von Stellen in Kontakt ist oder Erfassen von Profildaten, die dem Oberflächenprofil des zu messenden Objekts entsprechen,
**dadurch gekennzeichnet, dass** das Verfahren des Weiteren umfasst:
Festlegen einer Führungslinie, die sich in eine Richtung von den Pseudomesspunkten oder den Profildaten aus erstreckt, wobei die Richtung innerhalb eines bestimmten Winkels von einer Normalen liegt, die rechtwinklig zu einem Locus der Pseudomesspunkte ist;
Zuordnen eines Kontaktmodells durch Abgleichen eines Referenzpunktes des Kontaktmodells mit den Pseudomesspunkten oder den Profildaten, und Abgleichen einer Richtung des Kontaktmessfühlers und des Kontaktmodells zum Zeitpunkt der Messung, wobei das Kontaktmodell ein Oberflächenprofil des Kontaktmessfühlers angibt und einen vorbestimmten Definitionsbereich aufweist, wobei der Definitionsbereich als eine fächerförmige Fläche definiert ist, die sich symmetrisch von einer sich von dem Referenzpunkt des Kontaktmodells aus erstreckenden Linie ausweitet;
Erfassen von Positionen der Oberfläche des zu messenden Objekts als Messpunkte auf der Grundlage von Schnittpunkten der Führungslinien und einer Oberfläche des Kontaktmodells; und
Löschen eines Messpunktes, der durch den Messpunkterfassungsabschnitt auf der Grundlage einer Beziehung zwischen dem Definitionsbereich und den Messpunkten löscht erhalten wurde.

4. Verfahren nach Anspruch 3, wobei beim Löschen eines Messpunktes ein am Ende des Definitionsbereichs festgelegter Messpunkt gelöscht wird.

## Revendications

1. Dispositif de mesure de profil pour faire suivre par une sonde du type à contact (17a) la surface d'un objet à mesurer (31) et pour mesurer le profil de la surface dudit objet à mesurer, le dispositif comprenant :
une section d'acquisition (212, 219) effectuant l'acquisition, en tant que points de pseudo-mesure (Aₖ), des coordonnées de position d'un point de base (D) de ladite sonde du type à contact lorsque ladite sonde du type à contact est en contact avec ledit objet à mesurer en une pluralité d'emplacements, ou effectuant l'acquisition de données de profil concernant le profil de la surface dudit objet à mesurer,
**caractérisé en ce que** le dispositif comprend en outre :
une section de génération de ligne de guidage (213) déterminant une ligne de guidage (B) s'étendant dans une direction à partir de l'un des points de pseudo-mesure ou des données de profil, la direction se trouvant à l'intérieur d'un certain angle par rapport à une normale perpendiculaire au lieu des points de pseudo-mesure ;
une section d'allocation de modèle de contact (214) effectuant l'allocation d'un modèle de contact (C) en faisant correspondre un point de base dudit modèle de contact avec l'un desdits points de pseudo-mesure ou avec lesdites données de profil et en faisant correspondre l'orientation de ladite sonde du type à contact et dudit modèle de contact au moment de la mesure, ledit modèle de contact spécifiant un profil de surface de ladite sonde du type à contact et ayant une plage de définitions prédéterminée (DA), la plage de définitions étant définie comme une zone en forme d'éventail s'élargissant symétriquement par rapport à une ligne s'étendant depuis le point de base du modèle de contact ;
une section d'acquisition de points de mesure (216) effectuant l'acquisition, en tant que points de mesure, des positions de la surface dudit objet à mesurer en se basant sur les points d'intersection de la ligne de guidage et d'une surface dudit modèle de contact ; et
une section de suppression de point de mesure (217) supprimant un point de mesure obtenu par ladite section d'acquisition de points de mesure en se basant sur la relation entre ladite plage de définitions et lesdits points de mesure.

2. Dispositif de mesure de profil selon la revendication 1, dans lequel ladite section de suppression de points de mesure supprime le point de mesure déterminé à une extrémité de ladite plage de définitions.

3. Procédé de mesure du profil de la surface d'un objet à mesurer en faisant suivre par une sonde du type à contact la surface de l'objet à mesurer, le procédé comprenant :
l'acquisition, en tant que points de pseudo-mesure, des coordonnées de position d'un point de base de ladite sonde du type à contact lorsque ladite sonde du type à contact est en contact avec ledit objet à mesurer en une pluralité d'emplacements, ou effectuant l'acquisition de données de profil concernant le profil de la surface dudit objet à mesurer,
**caractérisé en ce que** le procédé comprend en outre :
la détermination d'une ligne de guidage s'étendant dans une direction à partir de l'un des points de pseudo-mesure ou des données de profil, la direction se trouvant à l'intérieur d'un certain angle par rapport à une normale perpendiculaire au lieu des points de pseudo-mesure ;
l'allocation d'un modèle de contact en faisant correspondre un point de base dudit modèle de contact avec l'un desdits points de pseudo-mesure ou avec lesdites données de profil et en faisant correspondre l'orientation de ladite sonde du type à contact et dudit modèle de contact au moment de la mesure, ledit modèle de contact spécifiant un profil de surface de ladite sonde du type à contact et ayant une plage de définitions prédéterminée, la plage de définitions étant définie comme une zone en forme d'éventail s'élargissant symétriquement par rapport à une ligne s'étendant depuis le point de base du modèle de contact ;
l'acquisition, en tant que points de mesure, des positions de la surface dudit objet à mesurer en se basant sur les points d'intersection de la ligne de guidage et dudit modèle de contact ; et
la suppression d'un point de mesure obtenu par ladite section d'acquisition de points de mesure en se basant sur la relation entre ladite plage de définitions et lesdits points de mesure.

4. Procédé selon la revendication 3, dans lequel lors de la suppression d'un point de mesure, un point de mesure déterminé sur le bord de ladite plage de définitions est supprimé.
